Europäisches Patentamt

European Patent Office

Office européen des brevets

(19)

(11) **EP 1 684 282 A2**

(12) **EUROPEAN PATENT APPLICATION**

(43) Date of publication:
26.07.2006 Bulletin 2006/30

(51) Int Cl.:
*G11B 7/24* *(2006.01)*

(21) Application number: 06001433.9

(22) Date of filing: 24.01.2006

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **25.01.2005 JP 2005016283**

(71) Applicant: **TDK Corporation**
**Chuo-ku,**
**Tokyo 103-8272 (JP)**

(72) Inventors:
• **Kobayashi, Tatsuhiro**
**Tokyo 103-8272 (JP)**
• **Kikukawa, Takashi**
**Tokyo 103-8272 (JP)**
• **Fukuzawa, Narutoshi**
**Tokyo 103-8272 (JP)**

(74) Representative: **Grünecker, Kinkeldey,**
**Stockmair & Schwanhäusser**
**Anwaltssozietät**
**Maximilianstrasse 58**
**80538 München (DE)**

(54) **Optical recording medium**

(57)    An optical recording medium includes a laminated body in which at least a dielectric layer 6 is interposed between a recording layer 7 and a light absorbing layer 5, the optical recording medium being constructed so that data recorded by a recording mark train including recording marks whose lengths are less than the resolution limit are reproduced. The optical recording medium has reflectance of 20 to 80% and a laser beam is irradiated at a power density of $5.6 \times 10^8$ to $1.2 \times 10^{10}$ W/m$^2$ to reproduce the recorded data.

# FIG. 3 (a)

EP 1 684 282 A2

# FIG. 3 (b)

**Description**

BACKGROUND OF THE INVENTION

The present invention relates to an optical recording medium, and more specifically, to an optical recording medium in which data recorded by a recording mark train can be stably reproduced over a plurality of times, the recording mark train including at least one of a recording mark and a blank region, whose length is less than the resolution limit.

Conventionally, as a recoding medium for recording digital data, an optical recording medium which is represented by CD or DVD has been widely used. Recently, however, the development of an optical recording medium having a large capacity and a high data transfer rate is being actively performed. In such an optical recoding medium, the wavelength $\lambda$ of a laser beam used in recording and reproducing data is shortened, and the beam spot diameter of the laser beam becomes smaller by increasing the numerical apertures NA of an object lens, thereby increasing the recoding capacity of the optical recoding medium.

In an optical recording medium, if the length of a recording mark recorded on the optical recording medium and the length between the adjacent recording marks become less than the resolution limit, it is impossible to reproduce data from the optical recording medium. The length between the adjacent recording marks refers the length of a region where recording marks are not formed (hereinafter, referred to as blank region').

The resolution limit is determined by the wavelength $\lambda$ of a laser beam and a numerical apertures NA of an object lens for focusing the laser beam. When the repeating frequency between recording marks and the blank region, that is, the spatial frequency is larger than $2NA/\lambda$, it is impossible to read data recorded by the recording marks and the blank region. Therefore, the lengths of the recoding marks and the blank region, corresponding to the spatial frequency at which data can be read, are respectively larger than $\lambda/4NA$. When a laser beam with a wavelength $\lambda$ is focused onto the recording layer of the optical recording medium by an object lens of which numerical apertures is NA, the length of $\lambda/4NA$ of the recording mark and blank region is the shortest length where data recorded in the recording marks and the blank region can be read.

As described above, when data is reproduced, there is a limit in the length of the recording mark and blank region where data can be reproduced. Therefore, the length of the recording mark and blank region which can be formed when data is recorded on the optical recording medium is inevitably limited. Therefore, in order to increase the recording capacity of the optical recording medium, it is required that the wavelength $\lambda$, of a laser beam used in reproducing data should be shortened or the resolution limit should be reduced by increasing the numerical apertures NA of an object lens, so that data recorded by a recording mark train having a shorter length can be reproduced.

However, there is a limitation in shortening the wavelength $\lambda$ of a laser beam used in reproducing data or increasing the numerical apertures NA of an object lens. Further, there is a limitation in increasing the recording volume of the optical recoding medium by reducing the resolution limit.

Considering such a condition, various techniques have been recently proposed in which a recording mark train whose length is less than the resolution limit is formed to reproduce recorded data. As one of those techniques, a technique is known in which near-field light is used to reproduce data recorded by a recording mark train whose length is less than the resolution limit. (for example, refer to Japanese Patent Document JP-A-2004-087073).

An optical recording medium disclosed in JP-A-2004-087073 is provided with a polycarbonate substrate, on which a dielectric layer including ZnS and $SiO_2$ as a main component, a recoding layer including a platinum oxide as a main component, a dielectric layer including ZnS and $SiO_2$ as a main component, a light absorbing layer including a phase change material as a main component, and a dielectric layer including a mixture of ZnS and $SiO_2$ as a main component are laminated in this order from the incident surface of a laser beam.

In such an optical recording medium, a laser beam is irradiated to decompose the platinum oxide included in the recording layer into platinum and oxygen, and thus an oxygen gas is generated to form a cavity in the recording layer. Then, a recoding mark train whose length is less than the resolution limit is formed to record data.

In the optical recording medium disclosed in Patent Document 1, even when the length of the recording mark and the length of the blank region between the adjacent marks are less than the resolution limit, it is possible to reproduce the data constructed by the recoding mark train including the recording marks and the blank region.

However, in the optical recoding medium disclosed in the document, in order to obtain reproduced signals having good signal characteristics, a reproduction power of the laser beam needs to be set to 3.0 to 4.0 mW so that a laser beam having a larger output than general optical recording mediums is irradiated to reproduce data. Therefore, in the optical recoding medium disclosed in the document, when the data recorded in the optical recording medium is reproduced over a plurality of times, the signal characteristics of the reproduced signals are degraded so that the data cannot be reproduced stably. Accordingly, the reproduction stability thereof is strongly required to be enhanced.

## SUMMARY OF THE INVENTION

An object of the present invention is that it provides an optical recording medium in which data recorded by a recording mark train can be stably reproduced over a plurality of times, the recording mark train including at least one of a recording mark and a blank region whose length is less than the resolution limit.

The present inventor has repeated dedicated researches in order to achieve the object. As a result, when data is reproduced from an optical recoding medium including a laminated body in which at least a dielectric layer is interposed between a recording layer and a light absorbing layer, and when the optical recoding medium has reflectance of 20 to 80% and a laser beam is irradiated at a power density of $5.6 \times 10^8$ to $1.2 \times 10^{10}$ $W/m^2$ in order to reproduce the data, it is found that the reproduction stability of the optical recording medium can be improved.

The present invention has been finalized based on the knowledge. According to an aspect of the invention, an optical recording medium includes a laminated body in which at least a dielectric layer is interposed between a recording layer and a light absorbing layer, the optical recording medium being constructed so that data recorded by a recording mark train including recording marks whose lengths are less than the resolution limit are reproduced. The optical recoding medium has reflectance of 20 to 80% and a laser beam is irradiated at a power density of $5.6 \times 10^8$ to $1.2 \times 10^{10}$ $W/m^2$ in order to reproduce the recorded data.

According to the present invention, the reproduction stability of the optical recording medium can be improved. Therefore, regardless of the number of reproductions, the signal characteristics of the reproduced signals can be stabilized at all times. Accordingly, the data recorded on the optical recoding medium can be reproduced stably over a plurality of times.

In the present invention, the reflectance of 20 to 80% does not refer individual reflectance of the recording layer, the dielectric layer, and the like, which form the optical recording medium, but refers the reflectance of the overall optical recording medium in which those layers are laminated.

In the present invention, the reflectance R of the optical recording medium is defined by the following method.

First, a laminated body unit, in which a reflective layer including Ag as a main component and having a thickness of 20 nm is formed on a polycarbonate substrate having a flat surface, is set in a spectral photometer 'MPS200' (trade mark) made by Shimadzu Corporation, and a laser beam is irradiated in the form of parallel light onto the laminated body unit to measure reflectance R'.

Next, reference reflectance $R_{ref}$ is calculated according to the following equation.

[Expression 1]

$$R_{ref} = \frac{(1-r)^2 \cdot (R'-r)}{1-r \cdot (2-R')} \qquad (1)$$

Herein, r is expressed by the following expression.

[Expression 2]

$$r = \left(\frac{n-1}{n+1}\right)^2$$

Herein, n represents a refractive index of a resin layer when the resin layer is formed on the light incident surface of the optical recording medium.

Next, the laminated body unit is set in an optical recording medium evaluation device TDDU1000' (trade name) made by Pulstec Industrial, Co., Ltd. A laser beam set to the reproduction power is focused onto the laminated body unit though an object lens to measure an electric current $I_1$ flowing from a light detector.

Next, the optical recording medium is set in the optical recording medium evaluation device to measure the reflectance R. A laser beam set to the same reproduction power as the electric current $I_1$ is focused through an object lens on a region in which data of the optical recording medium is not recorded, to measure an electric current $I_2$ flowing from the light detector.

Finally, the reflectance R is calculated according to the following equation (2).
[Expression 3]

$$R = R_{ref} \cdot \frac{I_2}{I_1} \qquad (2)$$

The reflectance R calculated by the equation (2) becomes reflectance of the optical recording medium in the present invention.
In the present invention, the power density is defined by (the power of a laser beam)/(the area of beam spot of a laser beam).
In the present invention, when a laser beam set to the recoding power is irradiated, the recording layer is preferably constructed so that a volume change occurs in a region irradiated with the laser beam. Since the region where the volume change of the recording medium occurs has different optical characteristics from a region where a volume change does not occur, the region where the volume change of the recording medium occurs can be used as a recording mark.
The recording layer can be formed of a noble metal oxide, a noble metal nitride, an organic dye, or metal or semimetal whose thermal conductivity is low.
In the present invention, when the recording layer is formed of a noble metal oxide, and when a laser beam set to the recording power is irradiated, the noble metal oxide included as a main component in the recording layer is decomposed into noble metal and oxygen, and a cavity is formed. Further, particles of the noble metal are deposited within the cavity to form the recording mark.
In the present invention, when the recording layer is formed of a noble metal oxide, a platinum oxide is preferably used as the noble metal oxide for forming the recording layer.
The decomposition temperature of the platinum oxide is higher than that of other metal oxides. Therefore, when a laser beam set to the recording power is irradiated to form the recording mark, even though heat is diffused into the periphery thereof from the region where the laser beam is irradiated, the decomposition reaction of the platinum oxide is prevented from occurring in a region where the laser beam is not irradiated. Accordingly, the volume in a desired region of the recording layer can be changed so as to form the recording mark.
Even when a laser beam set to high reproduction power is irradiated to reproduce data, since the decomposition temperature thereof is higher than that of other noble metal oxides, the platinum oxide is not decomposed into platinum and oxide. Therefore, although the data recorded on the optical recording medium is repeatedly reproduced, the shape of the recording mark is not changed, and additional volume change does not occur in a region where the recording mark is not formed. Accordingly, the reproduction stability of the optical recording medium can be enhanced.
In the present invention, when the recording layer is formed of a noble metal nitride, a platinum nitride is preferably used as the noble metal nitride for forming the recording layer.
In the present invention, when the recording layer is formed of an organic dye, a dye which is absorbent to the wavelength of a recording laser beam and of which the decomposition temperature is higher than 300°C is preferably used as the organic dye for forming the recording layer. For example, when a laser beam with a wavelength of 390 to 420 nm is irradiated to record data on the optical recording medium, a macrocyclic dye such as a phthalocyanine derivatives, an azaporphyrin derivatives, a porphycene derivatives, a corrole derivatives, or the like and a dye such as a coumarin derivatives, a metal-containing azaoxonol derivatives, a benzotriazole derivatives, a styryl derivatives, a hexatriene derivatives, or the like can be used. Even among them, a monomethine cyanine or porphyrin dye is preferable from the viewpoint of a material cost, the film formation, and an absorbent property with respect to the wavelength of a laser beam. The macrocyclic dye such as a porphyrin dye, in which pyrrole rings are connected to each other, is more preferable, because light resistance is highly likely to be enhanced by central metal or a modifying functional group.
When the recoding layer includes an organic dye as a main component, the recording layer may include, as a main component, a mixture in which a plurality of dyes are mixed. In addition, for the purpose of the storage stability at high temperature and high humidity, the light resistance, the promotion of decomposition, the prevention of aggregation, and the like, an element other than dyes may be added.
In the present invention, when the recording layer includes, as a main component, metal or semimetal whose thermal conductivity is low, the thermal conductivity of the metal or semimetal included as a main component in the recoding layer is preferably less than 2.0 W/(cm·K). The recording layer may be formed of at least one metal or semimetal, which is selected from a group composed of Sn, Zn, Mg, Bi, Ti, and Si, or an alloy including them. When the recording layer is formed of the metals or semimetals, a region where a laser beam set to the recording power is irradiated is effectively heated. Therefore, a small recording mark whose length is less than the resolution limit can be effectively formed.

In the present invention, it is preferable that the reflective layer be further formed on the substrate.

When the reflective layer is formed on the substrate, and when a laser beam set to the reproduction power is irradiated, the heat applied by the laser beam can be diffused into the periphery thereof from the place where the laser beam is irradiated, by the reflective layer. Therefore, the optical recording medium can be reliably prevented from being excessively heated, and the data recorded on the optical recording layer can be prevented from being deteriorated.

When the reflective layer is further formed on the substrate, the laser beam reflected by the surface of the reflective layer is interfered with the laser beam reflected by the layer laminated on the reflective layer. As a result, since an amount of reflected light composing a reproduced signal becomes large, the C/N ratio of the reproduced signal can be improved.

In the present invention, the dielectric layer and the light absorbing layer are preferably constructed so as to be deformed with the volume change of the recording layer when the recording mark train is formed on the recording layer.

The region where the dielectric layer and the light absorbing layer are deformed has different optical characteristics from a region where the dielectric layer and the light absorbing layer are not deformed. Therefore, reproduced signals having excellent signal characteristics can be obtained.

In the present invention, the dielectric layer preferably includes a mixture of ZnS and $SiO_2$ as a main component. The dielectric layer including the mixture of ZnS and $SiO_2$ as a main component has a high optical transmittance with respect to a laser beam for recording and reproduction. Further, the dielectric layer has a relatively low hardness. Therefore, when the recoding layer is deformed, the dielectric layer is easily deformed.

According to the present invention, there can be provided the optical recording layer in which the data recorded by the recording mark train including at least one of the recording mark and the blank region can be stably reproduced over a plurality of times.

BRIEF DESCRIPTION OF THE DRAWINGS

Fig. 1 is a perspective cross-sectional view of an optical recording medium according to a preferred embodiment of the present invention.

Fig. 2 is an enlarged cross-sectional view of a portion indicated by A of Fig. 1.

Fig. 3(a) is an enlarged cross-sectional view of a portion of the optical recording medium before data is recorded, and Fig. 3(b) is an enlarged cross-sectional view of a portion of the optical recording medium after data is recorded.

Fig. 4 is a graph showing the relationship between the C/N ratio of reproduced signals and the number of reproductions.

Fig. 5 is a graph showing the relationship between the C/N ratio of reproduced signals and the number of reproductions.

DETAILED DESCRIPTION OF THE PREFERRED EMBODIMENTS

Hereinafter, a preferred embodiment of the present invention will be described in detail with reference to the accompanying drawings.

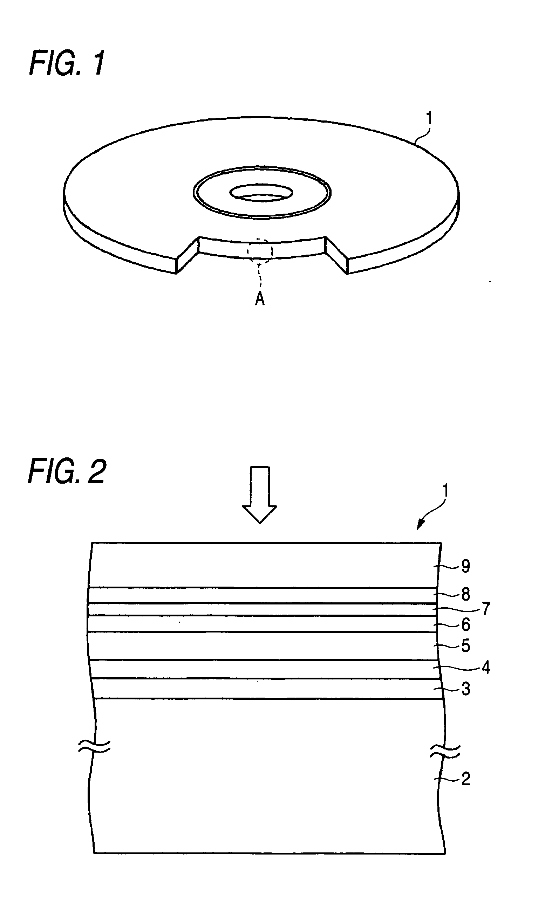

Fig. 1 is a perspective view illustrating an optical recording medium according to a preferred embodiment of the invention, and Fig. 2 is an enlarged cross-sectional view of a portion indicated by A in the cross section taken along the track of the optical recording medium shown in Fig. 1.

As shown in Fig. 2, the optical recording medium 1 according to the invention is provided with a supporting substrate 2, on which a reflective layer 3, a third dielectric layer 4, a light absorbing layer 5, a second dielectric layer 6, a recording layer 7, a first dielectric layer 8, and a light transmitting layer 9 are laminated in the this order.

As shown in Fig. 2, the optical recording medium 1 is constructed so that a laser beam is irradiated from the side of the light transmitting layer 9 to record data and to reproduce the recorded data. The laser beam having a wavelength λ of 390 to 420 nm is focused onto the optical recoding medium 1 by an object lens having numerical apertures NA of 0.7 to 0.9.

In the present embodiment, the optical recoding medium 1 is constructed so as to have reflectance of 20 to 80% with respect to the laser beam having a wavelength λ of 390 to 420 nm. The reflectance herein does not refer individual reflectance of the reflective layer 3, the third dielectric layer 4, the light absorbing layer 5, the second dielectric layer 6, the recording layer 7, the first dielectric layer 8, and the light transmitting layer 9, which composes the optical recording medium 1, but refers the reflectance of the overall optical recording medium 1 in which the above-described layers are laminated.

The supporting substrate 2 functions as a supporting body for securing mechanical strength which is required for the optical recording medium 1. On the surface of the supporting substrate 2, a groove (not shown) and land (not shown) are formed in a spiral shape from the vicinity of the center toward the outer edge thereof.

When data is recorded in the recording layer 7, and when the data recorded in the recording layer 7 is reproduced, the groove and land function as a guide track of a laser beam.

A material which is used to form the supporting substrate 2 is not particularly limited, if the material can function as a supporting body of the optical recording medium 1. The supporting substrate 2 can be formed of, for example, a glass, a ceramic, a resin, or the like. Among them, a resin is preferably used from the viewpoint of the ease of the formation. As such a resin, there are exemplified a polycarbonate resin, an olefin resin, an acrylic resin, an epoxy resin, a polystyrene resin, polyethylene resin, a polypropylene resin, a silicon resin, a fluorine resin, an ABS resin, a urethane resin, and the like. Even among them, the polycarbonate resin and the olefin resin are particularly preferable from the viewpoint of the processability and the optical characteristics.

The thickness of the supporting substrate 2, although not being particularly limited, is preferably in the range of 1.0 to 1.2 mm from the viewpoint of the compatibility with a current optical recording medium.

The reflective layer 3 functions to reflect a laser beam incident through the light transmitting layer 9 and again emitting the laser beam from the light transmitting layer 9.

A material which is used to form the reflective layer 3 is not particularly limited, if the material can reflect a laser beam. The reflective layer can be formed by using at least one element which is selected from a group composed of Au, Ag, Cu, Pt, Al, Ti, Cr, Fe, Co, Ni, Mg, Zn, Ge, and Si. In addition, the thickness of the reflective layer 3, although not being particularly limited, is preferably in the range of 5 to 200 nm.

The third dielectric layer 4 not only protects the supporting substrate 2 and the reflective layer 3, but also physically and chemically protects the light absorbing layer 5 formed thereon.

A dielectric material which is used to form the third dielectric material 4 is not particularly limited. For example, an oxide, a nitride, a sulfide, a fluoride, or a dielectric material which includes a combination thereof as a main component can be used. Preferably, the third dielectric layer 4 is formed of an oxide, a nitride, a sulfide, a fluoride, which contains at least one element which is selected from a group composed of Si, Zn, Al, Ta, Ti, Co, Zr, Pb, Ag, Sn, Ca, Ce, V, Cu, Fe, and Mg, or a compound thereof. As the material which is used to form the third dielectric layer 4, a mixture of ZnS and $SiO_2$ is particularly preferable.

The third dielectric layer 4 can be formed on the surface of the reflective layer 3 by a vapor-phase epitaxial method using a chemical species containing elements of the third dielectric layer 4. As the vapor-phase epitaxial method, a vacuum evaporation method, a sputtering method, and the like are exemplified.

The thickness of the third dielectric layer 4, although not being particularly limited, is preferably in the range of 10 to 140 nm. In a case where the thickness of the third dielectric layer 4 is less than 10 nm, and in a case where the reproduction power Pr of a laser beam is set to be lower than when data is reproduced from a conventional optical recording medium using near-field light as will be described below, the signal level of a reproduced signal can be significantly lowered. On the other hand, in a case where the thickness exceeds 140 nm, the film formation time of the third dielectric layer 4 is lengthened. As a result, the productivity of the optical recording medium 1 can be reduced.

The light absorbing layer 5 has a function of absorbing a laser beam so as to generate heat and then transmitting the generated heat to the recording layer 7, which will be described below, when the laser beam set to a recording power Pw is irradiated onto the optical recording layer 1.

The light absorbing layer 5 is formed of an alloy containing at least one of Sb and Te, whose light absorption coefficient is high and whose thermal conductivity is low. As the alloy containing at least one of Sb and Te included in the light absorbing layer 5, an alloy with a composition which is expressed by $(Sb_aTe_{1-a})_{1-b}M_b$ or $\{(GeTe)_c(Sb_2Te_3)_{1-c}\}_dX_{1-d}$ is particularly preferable. The element M represents elements excluding Sb and Te, and the element X represents elements excluding Sb, Te, and Ge.

When the alloy containing at least one of Sb and Te included in the light absorbing layer 5 has a composition which is expressed by $(Sb_aTe_{1-a})_{1-b}M_b$, it is preferable that a is in the range of $0 \leq a \leq 1$ and b is in the range of $0 \leq b \leq 0.25$. When b exceeds 0.25, the light absorption coefficient can become less than that required for the light absorbing layer 5, and the thermal conductivity can become less than that required for the light absorbing layer 5.

The element M, even though not being particularly limited, preferably includes, as a main component, at least one element which is selected from a group composed of In, Ag, Au, Bi, Se, Al, Ge, P, H, Si, C, V, W, Ta, Zn, Mn, Ti, Sn, Pb, Pd, N, O, and a rare-earth element (such as Sc, Y, a lanthanoid).

On the other hand, when the alloy containing at least one of Sb and Te included in the light absorbing layer 5 has a composition which is expressed by $\{(GeTe)_c(Sb_2Te_3)_{1-c}\}_dX_{1-d}$, it is preferable that c is set to be in the range of $1/3 \leq c \leq 2/3$ and d is set to be greater than or equal to 0.9 (that is, $0.9 \leq d$).

The element X, even though not particularly being limited, preferably includes, as a main component, at least one element which is selected from a group composed of In, Ag, Au, Bi, Se, Al, P, H, Si, C, V, W, Ta, Zn, Mn, Ti, Sn, Pb, Pd, N, O, and a rare-earth element.

The light absorbing layer 5 preferably has a thickness of 5 to 100 nm. When the thickness of the light absorbing layer 5 is less than 5 nm, an amount of absorbed light is excessively small. On the other hand, if the thickness of the light absorbing layer 7 exceeds 100 nm, the light absorbing layer 5 can be hardly deformed when a cavity is formed in a decomposition reaction layer of the recording layer 7 as will be described below.

The second dielectric layer 6 has a function of physically and chemically protecting the recording layer 7 as well as the first dielectric layer 8.

The second dielectric layer 6 includes a mixture of ZnS and $SiO_2$ as a main component. The dielectric layer including a mixture of ZnS and $SiO_2$ as a main component has a high optical transmittance with respect to a laser beam having a wavelength $\lambda$ of 390 to 420 nm, and the hardness thereof is relatively low. Therefore, when a cavity is formed in the recording layer 7 as will be described below, the second dielectric layer 6 is easily deformed. The second dielectric layer 6 can be formed by, for example, a vapor-phase epitaxial method such as a vacuum evaporation method, a sputtering method, or the like,

Preferably, the thickness of the second dielectric layer 6 is in the range of 5 to 100 nm.

On the recording layer 7, data is recorded. When data is recorded, a recording mark is formed on the recording layer 7.

The recording layer 7 includes a platinum oxide PtOx as a main component. Even when the length of the recording mark and the length of a blank region between the adjacent recording marks are less than the resolution limit, x is preferably in the range of $1.0 \leq x < 3.0$, in order to obtain a reproduced signal with a high C/N ratio.

The recording layer 7 is formed on the surface of the second dielectric layer 6 by a vapor-phase epitaxial method using a chemical species containing an element included as a main component in the recording layer 7. As the vapor-phase epitaxial method, a vacuum evaporation method, a sputtering method, and the like are exemplified. Even though not being particularly limited, the thickness of the recording layer 7 is preferably in the range of 2 to 120 nm, and is more preferably in the range of 4 to 20 nm. When the thickness of the recording layer 7 is less than 2 nm, the recording layer 7 cannot be formed as a continuous film. On the other hand, when the thickness exceeds 120 nm, the recording layer 7 is hardly deformed.

The first dielectric layer 8 not only has a function of physically and chemically protecting the recording layer 7, but also functions to adjust the reflectance of the overall optical recording medium 1.

A method of adjusting the reflectance of the overall optical recording medium 1 is broadly divided into two methods. One method is 'to adjust the reflection intensities of the respective layers composing the optical recording medium 1 so as to adjust optical constants of the respective layers'. The other method is to adjust the phase relation between incident light and reflected light so as to adjust the degree of the interference between the incident light and the reflected light'. In the present embodiment, the latter is applied, and the thickness of the first dielectric layer 8 is determined so that the reflectance of the overall optical recording medium 1 is in the range of 20 to 80%.

As light which is incident on a light detector, there are two types of light. One is emitted to the outside of the optical recording medium 1 from the side of the light transmitting layer 9 after being reflected by the reflective layer 3 and then reaches the light detector. The other is emitted to the outside of the optical recording medium 1 from the side of the light transmitting layer 9 after being repeatedly reflected between the reflective layer 3 and the light transmitting layer 9 and then reaches the light detector. Therefore, the interference between the light incident on the optical recording medium 1 and the light emitted toward the light detector occurs between the reflective layer 3 and the light detector and between the reflective layer 3 and the light transmitting layer 9. Accordingly, the reflectance of the overall optical recording medium 1 is influenced not only by the thickness of the first dielectric layer 8, but also by the thicknesses of layers other than the first dielectric layer 8. The reflectance is not determined only by the thickness of the first dielectric layer 8.

In the present embodiment, after the thicknesses of the reflective layer 3, the third dielectric layer 4, the light absorbing layer 5, the second dielectric layer 6, the recording layer 7, and the light transmitting layer 9 other than the first dielectric layer 8 are determined, the thickness of the first dielectric layer 8 is determined in order to adjust the reflectance of the overall optical recording medium 1. In other words, when only the thickness of the first dielectric layer 8 is changed after the thicknesses of the layers other than the first dielectric layer 8 are determined, the degree of the interference between the light irradiated onto the optical recording medium 1 and the light incident on the light detector changes, and an amount of light incident on the light detector increases or decreases. Therefore, the thickness of the first dielectric layer 8 when the reflectance of the overall optical recording medium 1 becomes in the range of 20 to 80% is determined as a preferable thickness of the first dielectric layer 8.

For example, when the reflective layer 3, the third dielectric layer 4, the light absorbing layer 5, the second dielectric layer 6, the recording layer 7 and the light transmitting layer 9 respectively have thicknesses oF20 nm, 120 nm, 20 nm, 75 nm, 4 nm, 100 nm, the first dielectric layer 8 preferably has a thickness of 55 to 95 nm.

The first dielectric layer 8 can be formed by using the same material as the third dielectric layer 4. Like the third dielectric layer 4, the first dielectric layer 8 can be formed by, for example, a vapor-phase epitaxial method such as a vacuum evaporation method, a sputtering method, or the like.

Through the light transmitting layer 9, a laser beam is transmitted. The surface thereof forms an incident surface of a laser beam.

A material which is used to form the light transmitting layer 9 is not particularly limited, if the material is optically transparent, the optical absorption and surface reflectance thereof are weak in the range of 390 to 420 nm which is a wavelength region of a laser beam to be used, and the birefringence thereof is small. When the light transmitting layer 9 is formed by a sputtering method or the like, a ultraviolet curable resin, an electron beam curable resin, heat curable resin, or the like is used to form the light transmitting layer 9. An active energy curable resin such as a ultraviolet curable resin or an electron beam curable resin is preferably used to form the light transmitting layer 9.

The thickness of the light transmitting layer 9 is preferably in the range of 10 to 200 $\mu$m.

On the optical recording medium 1 constructed as described above, data is recorded and reproduced as follows.

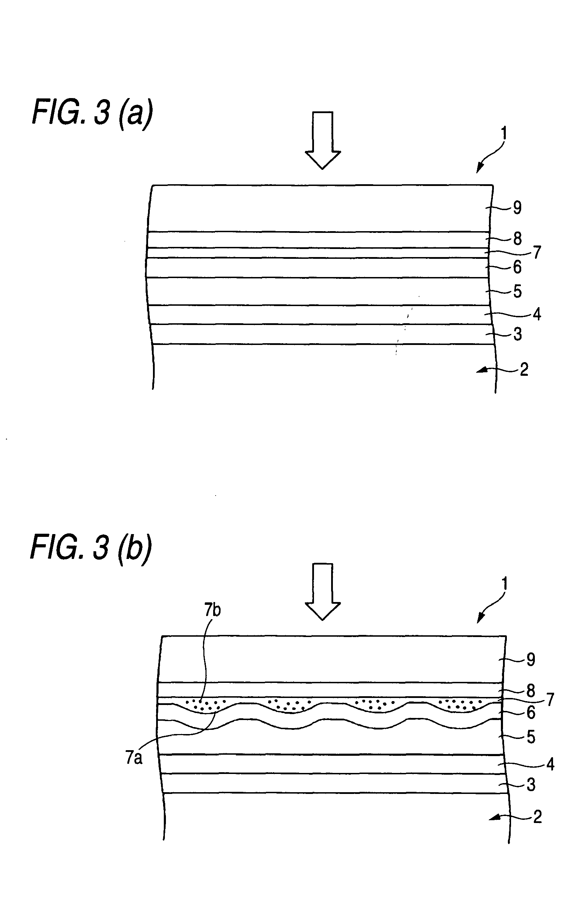

Fig. 3(a) is an enlarged cross-sectional view of a portion of the optical recording medium 1 before data is recorded. Fig. 3(b) is an enlarged cross-sectional view of a portion of the optical recording medium 1 after data is recorded.

When data is recorded on the optical recording medium 1, a laser beam set to the recording power Pw is focused onto the optical recording medium 1 through the light transmitting layer 9.

If the laser beam is irradiated onto the optical recording medium 1, a region of the light absorbing layer 5 where the laser beam is irradiated is heated. The heat generated by the light absorbing layer 5 is transmitted to the recording layer 7 so that the temperature of the recording layer 7 increases.

A platinum oxide included as a main component in the recording layer 7 is highly transparent to a laser beam. Therefore, although a laser beam is irradiated, the recording layer 7 hardly generates heat, and it is difficult to increase the temperature of the recording layer 7 more than the decomposition temperature of a platinum oxide. However, in the present embodiment, since the light absorbing layer 5 is provided, the light absorbing layer 5 generates heat, and the heat generated by the light absorbing layer 5 is transmitted to the recording layer 7 so as to increase the temperature of the recording layer 7.

As such, the recording layer 7 is heated more than the decomposition temperature of a platinum oxide, and the platinum oxide included as a main component in the recording layer 7 is decomposed into platinum and oxygen.

As a result, a cavity 7a is formed in the recording layer 7 by an oxygen gas produced by the decomposition of the platinum oxide, as shown in Fig. 3(b). Platinum particles 7b are deposited within the cavity 7a.

At the same time, the recording layer 7, as well as the light absorbing layer 5 and the second dielectric layer 6, is deformed by the pressure of the oxygen gas, as shown in Fig. 3(b).

As such, the region, in which the cavity 7a is formed and the light absorbing layer 5, the second dielectric layer 6 and the recording layer 7 are deformed, has a different optical characteristic from other regions. Therefore, recording marks are formed by the region in which the cavity 7a is formed and the light absorbing layer 5, and the second dielectric layer 6 and the recording layer 7 are deformed. In the recording marks and the blank region between and the adjacent recording marks, recording marks whose lengths are shorter than $\lambda/4NA$ are included, and a recording mark train whose length is less than the resolution limit is formed.

In the present embodiment, the recording layer 7 includes, as a main component, a platinum oxide whose decomposition temperature is high. Therefore, when the laser beam set to the recording power Pw is irradiated to form the recording marks, and even when heat from the region where the laser beam is irradiated is diffused into the surrounding recording layer 7, the decomposition reaction of the platinum oxide is prevented from occurring in a region where the laser beam is not irradiated. Accordingly, in a desired region of the recoding layer 7, the cavity 7a can be formed so as to form the recording marks.

As such, data is recorded on the optical recording medium 1, and the data recorded on the optical recording medium 1 is reproduced as follows.

When data is reproduced from the optical recording medium 1, the reproduction power Pr of a laser beam is set in the range of 0.1 to 2.2 mW. The laser beam set to the reproduction power Pr is irradiated onto the optical recording medium from the side of the light transmitting layer 9. Therefore, in the present embodiment, a laser beam is irradiated onto the optical recording medium 1 at a power density of 5.6 x $10^8$ to 1.2 x $10^{10}$ W/m$^2$ which is lower than when data is reproduced from a conventional optical recording medium using near-field light, in order to reproduce data.

If a laser beam is irradiated onto the optical recording medium 1, the laser beam is reflected by the optical recording medium 1. The reflected laser beam is received by the light detector so as to be converted into an electrical signal. Then, the data recorded on the light recording medium 1 is reproduced.

In the present embodiment, the cavity 7a is formed in the recording layer 7, and the platinum particles 7b are deposited within the cavity 7a. Then, the recording marks are formed, and thus data is recorded. In this case, even when the lengths of the recording marks composing a recording mark train and the length of the blank region between the adjacent recording marks are less than the resolution limit, data can be reproduced.

In the present embodiment, a laser beam is irradiated onto the optical recording medium 1 at a power density of 5.6 x $10^8$ to 1.2 x $10^{10}$ W/m$^2$. According to the study of the present inventor, when a laser beam is irradiated onto the optical recording medium 1 having reflectance of 20 to 80%, at a power density of 5.6 x $10^8$ to 1.2 x $10^{10}$ W/m$^2$ so that the data recorded on the optical recording medium 1 is reproduced, it is found that the reproduction stability of the optical recording medium 1 can be enhanced. Therefore, according to the present embodiment, the signal characteristics of reproduced signals can be always stabilized, regardless of the number of reproductions, which means the data recorded on the optical recording medium 1 can be stably reproduced over a plurality of times.

When the power density of a laser beam is less than $5.6 \times 10^8$ W/m$^2$, an amount of light incident on the light detector is not sufficient. Therefore, focus characteristics can be lowered, and noise included in a reproduced signal can be increased. When the power density of a laser beam exceeds $1.2 \times 10^{10}$ W/m$^2$, it is difficult to enhance the reproduction stability of the optical recording medium.

Further, in this embodiment, the recording layer 7 includes a platinum oxide with high decomposition termperature as a main component. However, even though the data is reproduced by irradiating a laser beam with a reproduction power Pr, the platinum oxide is not decomposed into platinum and oxygen. Therefore, even though the recorded data is repeatedly reproduced, the shape of the recording mark is not changed and additional cavity is not formed in a region where the recording mark is not formed. Accordingly, the reproduction stability of the optical recording medium I can be more enhanced.

Furthermore, in this embodiment, when the reflective layer 3 is formed on the supporting substrate 2, and when a laser beam set to the reproduction power Pr is irradiated, the heat applied by the laser beam can be diffused into the periphery thereof from the place where the laser beam is irradiated, by the reflective layer 3. Therefore, the optical recording medium 1 can be reliably prevented from being excessively heated, and the data recorded on the optical recording layer 1 can be prevented from being deteriorated.

When the reflective layer 3 is further formed on the supporting substrate 2, the laser beam reflected by the surface of the reflective layer 3 is interfered with the laser beam reflected by the layer laminated on the reflective layer 3. As a result, since an amount of reflected light composing a reproduced signal becomes large, the C/N ratio of the reproduced signal can be improved.

[Examples]

Hereinafter, examples will be described in order to make the effects of the invention be obvious.

Example 1

A polycarbonate substrate with a thickness of 1 mm and a diameter of 120 mm is set in a sputtering device to form a reflective layer with a thickness of 20 nm on the polycarbonate substrate using an alloy target of Ag, Pd, and Cu by a sputtering method.

Next, using a mixture target of ZnS and SiO$_2$, the third dielectric layer having a thickness of 120 nm is formed on a surface of the reflective layer. As the mixture target of ZnS and SiO$_2$, a target of which a molar ratio of ZnS:SiO$_2$ is expressed by 80 : 20 is used

Next, using an alloy with a composition of Sb$_{75}$Te$_{25}$ as a target, the light absorbing layer having a thickness of 20 nm is formed on the surface of the third dielectric layer by a sputtering method.

Next, using a mixture target of ZnS and SiO$_2$, the second dielectric layer having a thickness of 75 nm is formed on the surface of the light absorbing layer by a sputtering method. As the mixture target of ZnS and SiO$_2$, a target of which a molar ratio of ZnS:SiO$_2$ is expressed by 80 : 20 is used.

Next, with a mixed gas of an Ar gas and oxygen gas being used as a sputtering gas, and with a Pt target being used, the recording layer which includes a platinum oxide as a main component and has a thickness of 4 nm is formed on the surface of the second dielectric layer by a sputtering method.

Next, using a mixture target of ZnS and SiO$_2$, the first dielectric layer having a thickness of 67 nm is formed on the surface of the recording layer by a sputtering method. As the mixture target of ZnS and SiO$_2$, a target of which a molar ratio of ZnS:SiO$_2$ is expressed by 80 : 20 is used.

Finally, on the surface of the first dielectric layer, ultraviolet curable acrylic resin is coated by a spin coat method to form a coated film. Further, ultraviolet rays are irradiated onto the coated film to form the light transmitting layer having a thickness of 100 $\mu$m. As such, a sample #1 is manufactured.

Next, samples #2 to #5 are manufactured as the same as sample #1, except that the thickness of the first dielectric layer is changed as shown in Table 1.

**[Table 1]**

|  | Thickness (nm) |
|---|---|
| Sample #2 | 77 |
| Sample #3 | 87 |
| Sample #4 | 97 |
| Sample #5 | 107 |

Next, the samples #1 to #5 are sequentially set in an optical recording medium evaluation device 'DDU1000' (trade name) made by Pulstec Industrial, Co., Ltd. to measure individual reflectance of the samples #1 to #5. The measurement result is shown in Table 2.
**[Table 2]**

|  | Reflectance (%) |
|---|---|
| Sample #1 | 24.1 |
| Sample #2 | 27 |
| Sample #3 | 25 |
| Sample #4 | 18 |
| Sample #5 | 8.7 |

Further, the samples #1 to #5 are sequentially set in the above-described optical recording medium evaluation device. With a blue laser beam with a wavelength of 405 nm being used as a recording laser beam, and with an object lens having numerical apertures NA of 0.85 being used, data is recorded on the respective samples. In recording data on the samples #1 to #5, a recording mark train composed of recording marks of 300 nm and a blank region of 300 nm is formed on the recording layers of the respective samples on the following condition.

Recording linear velocity: 4.9 m/s
Recording method: on-groove recording
Recording power of the laser beam: 9.0 mW

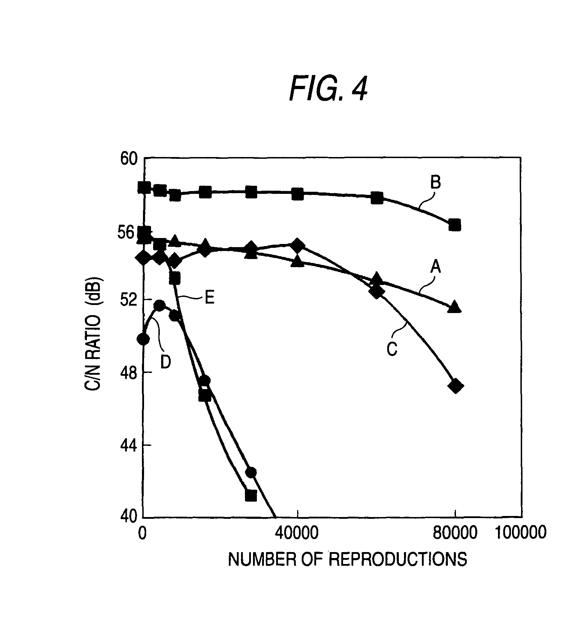

Next, after the samples #1 to #5 are sequentially set in the optical recording medium evaluation device, the data recorded on the respective samples are respectively reproduced over 80,000 times in order to measure the C/N ratio of reproduced signals. In reproducing the data recorded on the samples #1 to #5, the reproduction power Pr of the laser beam is set to 2.0 mW for each sample, the power density is set to $1.1 \times 10^{10}$ W/m$^2$, and the reproduction linear velocity is set to 4.9 m/s for each sample.
The measurement results are represented by curved lines A to E of Fig. 4.
Next, a sample #6 is manufactured as the same as sample #1, except that the thicknesses of the reflective layer, the third dielectric layer, the light absorbing layer, the second dielectric layer, the recording layer, and the first dielectric layer are changed as shown in Table 3.
**[Table 3]**

| | Thickness(nm) |
|---|---|
| Reflective layer | 40 |
| Third dielectric layer | 20 |
| Light absorbing layer | 20 |
| Second dielectric layer | 60 |
| Recording Layer | 4 |
| First dielectric layer | 60 |

Further, samples #7 to #9 are manufactured by changing the thickness of the first dielectric layer as shown in Table 4.

**[Table 4]**

| | Thickness (nm) |
|---|---|
| Sample #7 | 70 |
| Sample #8 | 80 |
| Sample #9 | 90 |

Next, the samples #6 to #9 are sequentially set in the optical recording medium evaluation device to measure the reflectance of the samples #6 to #9. The measurement result is shown in Table 5.

**[Table 5]**

| | Reflectance (%) |
|---|---|
| Sample #6 | 25.4 |
| Sample #7 | 21.8 |
| Sample #8 | 14.3 |
| Sample #9 | 9.1 |

After the samples #6 to #9 are sequentially set in the optical recording medium evaluation device, data is recorded on the samples #6 to #9 in the same manner as data is recorded on the samples #1 to #5.

Next, after the samples #6 to #9 are sequentially set in the optical recording medium evaluation device, the data recorded on the respective samples are respectively reproduced over 15,000 times to measure the C/N ratio of reproduced signals. In reproducing the data recorded in the samples #6 to #9, the reproduction power Pr of the laser beam is set to 2.8 mW for each sample, the power density is set to $1.6 \times 10^{10}$ W/m$^2$, and the reproduction linear velocity is set to 4.9 m/s for each sample.

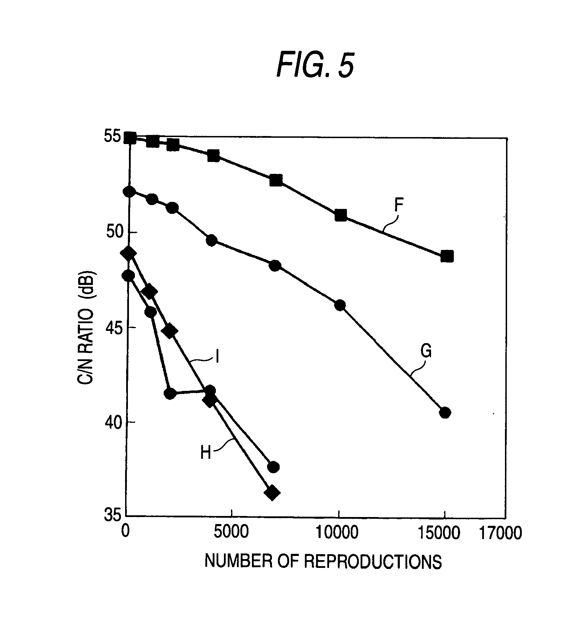

The measurement results are respectively represented by curved lines F to I of Fig. 5.

As seen from Fig. 4, when a laser beam was irradiated at a power density of $5.6 \times 10^8$ to $1.2 \times 10^{10}$ W/m$^2$ onto the samples #1 to #3 having reflectance of 20 to 80% in order to reproduce data, the C/N ratio does not decrease even though the number of reproductions approaches 4,000 times, and it was recognized that data can be stably reproduced over multiple times. On the contrary, in the samples #4 and #5 having reflectance less than 20%, the C/N ratio rapidly decreases and the reproduction stability is not excellent, regardless of whether a laser beam is irradiated to reproduce data at the same power density as the data recorded on the samples #1 to #3 are reproduced.

As seen from Fig. 5, when a laser beam is irradiated at a power density greater than $1.2 \times 10^{10}$ W/m$^2$ onto the samples #6 and #7 having reflectance of 20 to 80% in order to reproduce data, the C/N ratio decreases if the number of reproductions exceeds 3,000 times, and data can not be reproduced stably. Further, even when a laser beam is irradiated at a power density greater than $1.2 \times 10^{10}$ W/m$^2$ onto the samples #8 and #9 having reflectance less than 20% in order to reproduce data, the C/N ratio decreases as the number of reproductions increases, and the reproduction stability is not excellent.

The present invention is not limited to the embodiment which has been described in the above descriptions. Further, various changes other than the followings may be made therein without departing from the spirit and scope of the present invention as claimed. It is needless to say that those changes falls within the scope of the present invention.

For example, in the above-described embodiment, the optical recoding medium 1 is constructed so that the reflectance of the overall optical recording medium 1 becomes in the range of 20 to 80% by adjusting the thickness of the first dielectric layer 8. However, if the reflectance of the overall optical recording medium 1 cannot be set in the range of 20 to 80%, the reflectance of the overall optical recording medium 1 may be adjusted by adjusting the thickness of the layers other than the first dielectric layer 8.

In the above-described embodiment, the optical recording medium 1 is constructed so that the reflectance of the overall optical recording medium 1 becomes in the range of 20 to 80% by adjusting the phase relationship between incident light and reflected light and then adjusting the degree of the interference between the incident light and the reflected light. Instead of that, however, the reflection intensities of the respective layers composing the optical recoding medium 1 may be adjusted so that the reflectance of the overall optical recording medium 1 becomes in the range of 20 to 80%.

In the above-described embodiment, the optical recording medium 1 is provided with the supporting substrate 2, on which the reflective layer 3, the third dielectric layer 4, the light absorbing layer 5, the second dielectric layer 6, the recording layer 7, the first dielectric layer 8, and the light transmitting layer 9 are laminated in this order. The optical recording medium 1 is constructed so that a laser beam with a wavelength of 390 to 420 nm is irradiated from the light transmitting layer 9. However, the present invention can be also applied to a DVD type optical recording medium which is provided with an optically transparent substrate, on which the first dielectric layer 8, the recording layer 7, the second dielectric layer 6, the light absorbing layer 5, and the third dielectric layer 4 are sequentially laminated. The DVD type optical recording medium is constructed so that a laser beam with a wavelength of 635 to 660 nm is irradiated from the side of the optically transparent substrate.

In the above-described embodiment, the recording layer 7, the second dielectric layer 6, and the light absorbing layer 5 are sequentially laminated from the light incident surface of a laser beam in the optical recording medium 1. Instead of that, however, the recording layer 7, the second dielectric layer 6, and the light absorbing layer 5 may be sequentially laminated from the opposite side to the incident surface of the laser beam. Alternately, the light absorbing layer, the dielectric layer, the recording layer, the dielectric layer, and the light absorbing layer may be sequentially laminated from the light incident surface of a laser beam. In other words, in the present invention, the optical recording medium may have a laminated body which is formed so that the recording layer and the light absorbing layer interpose the dielectric layer.

This application is based upon and claims the benefit of priority of Japanese Patent Application No. 2005-016283 filed on January 25, 2005, the contents of which are incorporated herein by reference in its entirety.

## Claims

1. An optical recording medium comprising a laminated body in which at least a dielectric layer is interposed between a recording layer and a light absorbing layer, the optical recording medium being constructed so that data recorded by a recording mark train including recording marks whose lengths are less than the resolution limit are reproduced, wherein the optical recording medium has reflectance of 20 to 80% and a laser beam is irradiated at a power density of $5.6 \times 10^8$ to $1.2 \times 10^{10}$ W/m$^2$ to reproduce the recorded data.

2. The optical recording medium according to claim 1, wherein the recording layer includes a noble metal oxide as a main component.

3. The optical recording medium according to claim 2, wherein, when the laser beam set to a recording power is irradiated, the noble metal oxide included as a main component in the recording layer is decomposed into noble metal and oxygen to form a cavity, and the particles of the noble metal are deposited within the cavity so as to form recording marks.

4. The optical recording medium according to claim 3, wherein the noble metal oxide is composed of a platinum oxide, and the platinum oxide is decomposed into platinum and oxygen when the laser beam set to the recording power is irradiated.

5. The optical recording medium according to claim 1, wherein the dielectric layer and the light absorbing layer are deformed according to the volume change of the recording layer when the recoding mark train is formed on the recording layer.

6. The optical recording medium according to claim 5, wherein the dielectric layer includes a mixture of ZnS and $SiO_2$ as a main component.

## FIG. 1

## FIG. 2

## FIG. 3 (a)

## FIG. 3 (b)

## FIG. 4

# FIG. 5